# EUROPEAN PATENT APPLICATION

(11) **EP 4 776 745 A1**
(43) Date of publication of application: **15.07.2026**
(21) Application number: 24863221.8
(22) Date of filing: 05.09.2024
(51) Int. Cl.: H04W 76/15, H04W 76/22, H04W 92/20, H04W 36/00

(54) **APPARATUS AND METHOD FOR SUPPORTING DATA FORWARDING IN WIRELESS COMMUNICATION SYSTEM**

(30) Priority: 07.09.2023 US 202363536934 P
(71) Applicant: LG Electronics Inc., Yeongdeungpo-gu Seoul 07336 (KR)
(72) Inventor: HAN, Jaemin, Seoul 06772 (KR); BYUN, Daewook, Seoul 06772 (KR); KIM, Seokjung, Seoul 06772 (KR)
(74) Representative: Plasseraud IP
(86) International application number: PCT/KR2024/013418
(87) International publication number: WO 2025/053642

(57) **Abstract**

The purpose of the present disclosure is to support data forwarding in a wireless communication system, and a method performed by a first network node may comprise the steps of: transmitting a secondary node (SN) addition request message to a second network node; and receiving an SN addition request confirmation message from the second network node.

## Description

### TECHNICAL FIELD

The following description relates to a wireless communication system, and specifically, to an apparatus and method for supporting data forwarding for a subsequent Conditional Primary Secondary Cell (PSCell) Addition or Change (CPAC) procedure in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for efficiently supporting data forwarding in a wireless communication system.

The present disclosure relates to an apparatus and method for supporting data forwarding for a subsequent Conditional Primary Secondary Cell (PSCell) Addition or Change (CPAC) procedure in a wireless communication system.

The present disclosure relates to an apparatus and method for supporting subsequent CPAC without reconfiguration or re-initialization of CPAC configuration in a wireless communication system.

The present disclosure relates to an apparatus and method for obtaining information related to data forwarding proposals from at least one candidate Secondary Node (SN) during a PSCell addition or change preparation phase in a wireless communication system.

The present disclosure relates to an apparatus and method for obtaining information related to data forwarding proposals of candidate SNs using an SN addition procedure in a wireless communication system.

The present disclosure relates to an apparatus and method for retrieving information related to data forwarding proposals of candidate SNs using an SN addition request message in a wireless communication system.

The present disclosure relates to an apparatus and method for transmitting an SN addition acknowledgement message including information related to data forwarding proposals in a wireless communication system.

The present disclosure relates to an apparatus and method for obtaining information related to data forwarding proposals for at least one of candidate SN-initiated Protocol Data Unit (PDU) sessions or Data Radio Bearers (DRBs) for subsequent CPAC in a wireless communication system.

The present disclosure relates to an apparatus and method in which information related to data forwarding proposals pre-obtained from a candidate SN is used based on the candidate SN being selected for access in a wireless communication system.

The present disclosure relates to an apparatus and method for obtaining information related to forwarding Transport Network Layer addresses (TNLs) allocated based on data forwarding proposals of candidate SNs in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As an example of the present disclosure, a method performed by a first network node in a wireless communication system includes, transmitting a secondary node (SN) addition request message to a second network node, and receiving an SN addition request acknowledgement message from the second network node. The SN addition request acknowledgement message may include information related to a data forwarding proposal of the second network node.

As an example of the present disclosure, a method performed by a second network node in a wireless communication system includes, receiving a secondary node (SN) addition request message from a first network node, and transmitting an SN addition request acknowledgement message to the first network node. The SN addition request acknowledgement message may include information related to a data forwarding proposal of the second network node.

As an example of the present disclosure, a first network node in a wireless communication system includes a transceiver and a processor connected to the transceiver. The processor is configured to control to transmit a secondary node (SN) addition request message to a second network node and receive an SN addition request acknowledgement message from the second network node. The SN addition request acknowledgement message may include information related to a data forwarding proposal of the second network node.

As an example of the present disclosure, a second network node in a wireless communication system includes a transceiver and a processor connected to the transceiver. The processor is configured to control to receive a secondary node (SN) addition request message from a first network node and transmit an SN addition request acknowledgement message to the first network node. The SN addition request acknowledgement message may include information related to a data forwarding proposal of the second network node.

As an example of the present disclosure, a communication apparatus includes at least one processor, and at least one computer memory connected to the at least one processor and storing instructions that, based on being executed by the at least one processor, perform operations comprising transmitting a secondary node (SN) addition request message to a second network node, and receiving an SN addition request acknowledgement message from the second network node. The SN addition request acknowledgement message may include information related to a data forwarding proposal of the second network node.

As an example of the present disclosure, a non-transitory computer-readable medium storing at least one instruction includes the at least one instruction executable by a processor. The at least one instruction controls an apparatus to transmit a secondary node (SN) addition request message to a second network node and receive an SN addition request acknowledgement message from the second network node. The SN addition request acknowledgement message may include information related to a data forwarding proposal of the second network node.

### ADVANTAGEOUS EFFECTS

The following effects may be achieved by embodiments based on the present disclosure.

The present disclosure can support, without reconfiguration or re-initialization of Conditional PSCell Addition or Change (CPAC) configuration, subsequent CPAC in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5a and FIG. 5b illustrates an example of an inter-MN handover procedure with/without MN initiated SN change procedure.
FIG. 6 illustrates an example of a successful procedure of S-NG-RAN node addition preparation.
FIG. 7 illustrates an example of an unsuccessful procedure of S-NG-RAN node addition preparation.
FIG. 8a and FIG. 8b illustrate an example of a data forwarding support procedure for a subsequent CPAC according to an embodiment of the present disclosure.
FIG. 9 illustrates an example of a procedure for obtaining information related to data forwarding proposals according to an embodiment of the present disclosure.
FIG. 10 illustrates an example of a procedure for transmitting information related to data forwarding proposals according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

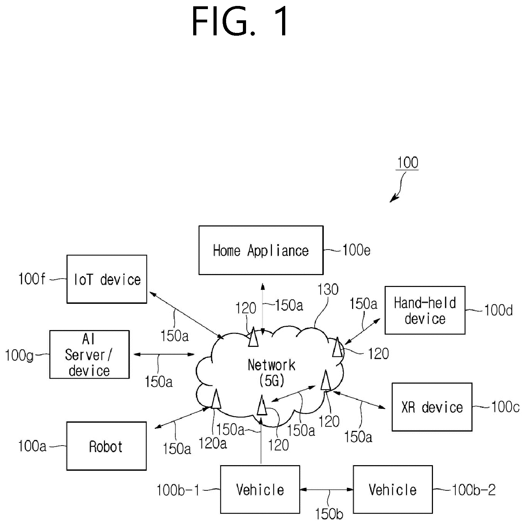

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

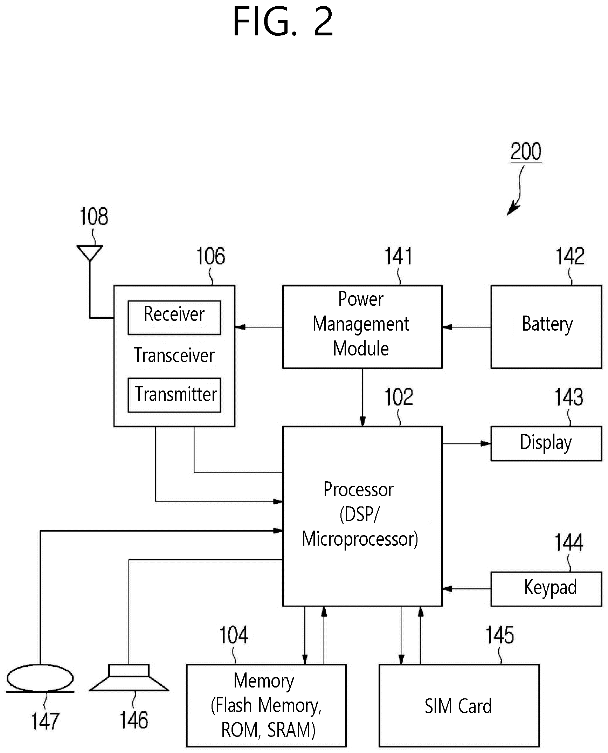

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

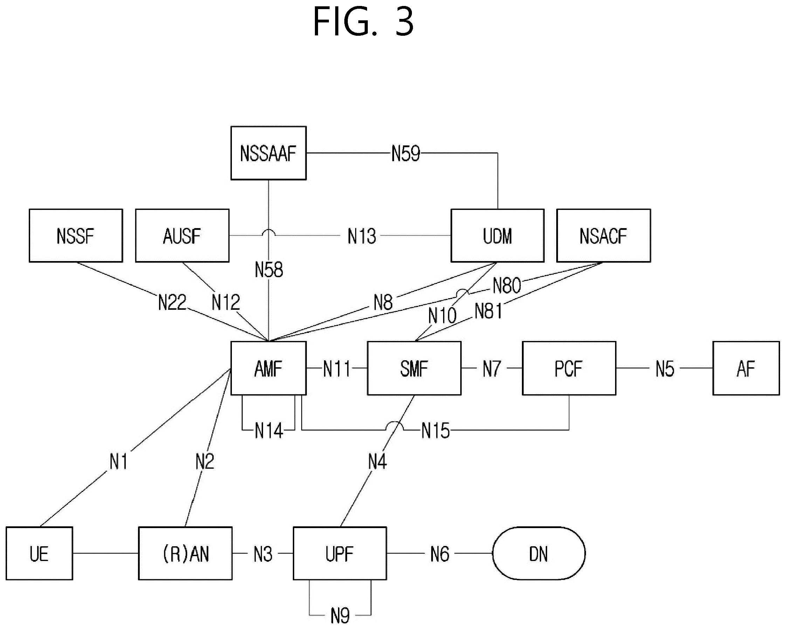

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

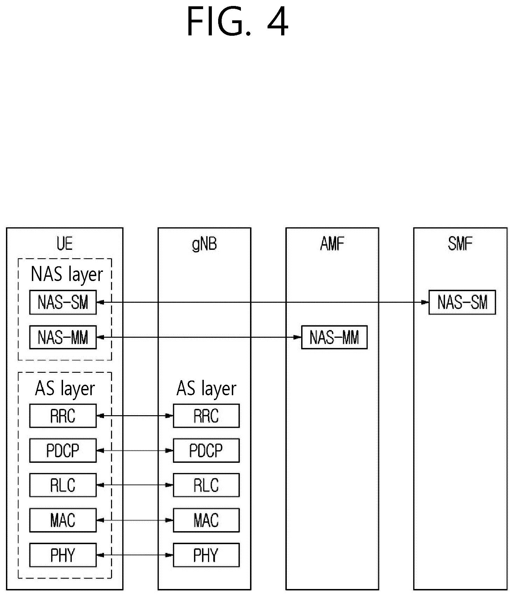

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

In the TS 37.340 specification document, MR-DC procedures are described as follows:

10.7.2 Multi-Radio Dual Connectivity (MR-DC) with 5GC

Inter-MN handover with/without MN initiated SN change is used to transfer UE context data from a source MN to a target MN while the UE context at the SN is kept or moved to another SN. During an inter-MN handover, the target MN decides whether to keep or change the SN (or release the SN, as described in clause 10.8). Only intra-RAT inter-MN handover with/without SN change is supported (e.g., no transition from NGEN-DC to NR-DC).

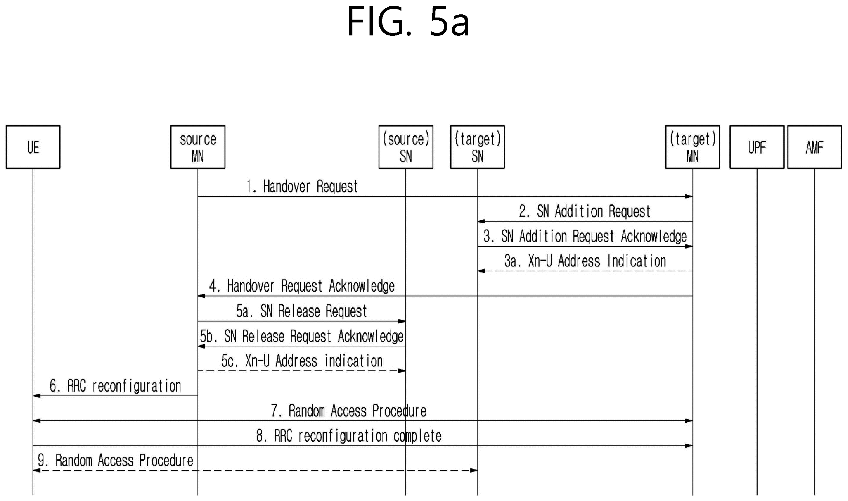

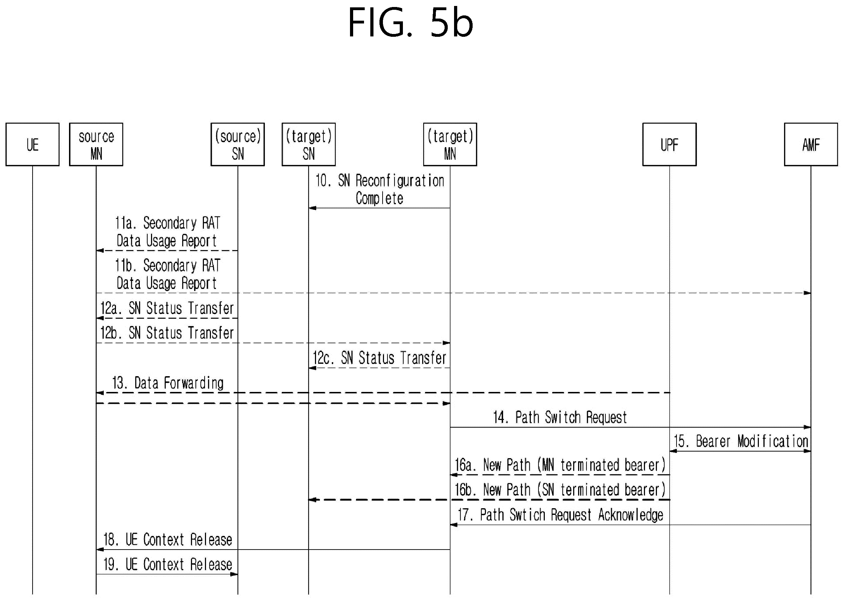

FIG. 5a and FIG. 5b illustrates an example of an inter-MN handover procedure with/without MN initiated SN change procedure.

NOTE 1: For an inter-Master Node handover without Secondary Node change, the source SN and the target SN shown in FIG. 5a and FIG. 5b are the same node.
1. The source MN starts the handover procedure by initiating the Xn handover preparation procedure including both MCG and SCG configuration. The source MN includes the source SN UE XnAP ID, SN ID and the UE context in the source SN in the handover request message.
   NOTE 2: The source MN may trigger the MN-initiated SN modification procedure (to the source SN) to retrieve the current SCG configuration and to allow provision of data forwarding related information before step 1.
2. If the target MN decides to keep the UE context in source SN, the target MN sends SN addition request to the SN including the SN UE XnAP ID as a reference to the UE context in the SN that was established by the source MN. If the target MN decides to change the SN allowing delta configuration, the target MN sends the SN addition request to the target SN including the UE context in the source SN that was established by the source MN. Otherwise, the target MN may send the SN addition request to the target SN including neither the SN UE XnAP ID nor the UE context in the source SN that was established by the source MN.
3. The (target) SN replies with SN addition request acknowledge. The (target) SN may include the indication of the full or delta RRC configuration.
   NOTE 2a0: In CHO with SCG configuration, it is up to the target MN implementation to make sure that the CG-Config provided from the (target) SN can be used in all CHO preparations.
3a. For SN terminated bearers using MCG resources, the target MN provides Xn-U DL TNL address information in the Xn-U Address Indication message.
4. The target MN includes within the handover request acknowledge message the MN RRC reconfiguration message to be sent to the UE in order to perform the handover, and may also provide forwarding addresses to the source MN. If PDU session split is performed in the target side during handover procedure, more than one data forwarding addresses corresponding to each node are included in the handover request acknowledge message. The target MN indicates to the source MN that the UE context in the SN is kept if the target MN and the SN decided to keep the UE context in the SN in Step 2 and Step 3.
5a/5b. The source MN sends SN release request message to the (source) SN including a cause indicating MCG mobility. The (source) SN acknowledges the release request. The source MN indicates to the (source) SN that the UE context in SN is kept, if it receives the indication from the target MN. If the indication as the UE context kept in SN is included, the SN keeps the UE context.
5c. The source MN sends XN-U address indication message to the (source) SN to transfer data forwarding information. More than one data forwarding addresses may be provided if the PDU session is split in the target side.
6. The source MN triggers the UE to perform handover and apply the new configuration.
7/8. The UE synchronizes to the target MN and replies with MN RRC reconfiguration complete message.
9. If configured with bearers requiring SCG radio resources, the UE synchronizes to the (target) SN.
   NOTE 2a1: The order the UE performs random access towards the MN (Step 7) and performs the random access procedure towards the SN (Step 9) is not defined.
10. If the RRC connection reconfiguration procedure was successful, the target MN informs the (target) SN via SN Reconfiguration Complete message.
11a. The source SN sends the secondary RAT data usage report message to the source MN and includes the data volumes delivered to and received from the UE over the NR/E-UTRA radio as described in clause 10.11.2.
   NOTE 2a2: The order the source SN sends the secondary RAT data usage report message and performs data forwarding with MN/target SN is not defined. The SN may send the report when the transmission of the related QoS is stopped.
11b. The source MN sends the secondary RAT report message to AMF to provide information on the used NR/E-UTRA resource.
12. For bearers using RLC AM, the source MN sends the SN status transfer message to the target MN, including, if needed, SN status received from the source SN. The target forwards the SN Status to the target SN, if needed.
13. If applicable, data forwarding takes place from the source side. If the SN is kept, data forwarding may be omitted for SN terminated bearers or QoS flows kept in the SN.
14-17. The target MN initiates the path switch procedure. If the target MN includes multiple DL TEIDs for one PDU session in the path switch request message, multiple UL TEID of the UPF for the PDU session should be included in the path switch acknowledge message in case there is TEID update in UPF.
   NOTE 3: If new UL TEIDs of the UPF for SN are included, the target MN performs MN initiated SN modification procedure to provide them to the SN.
18. The target MN initiates the UE context release procedure towards the source MN.
19. Upon reception of the UE context release message from source MN, the (source) SN releases C-plane related resources associated to the UE context towards the source MN. Any ongoing data forwarding may continue. The SN shall not release the UE context associated with the target MN if the UE contest kept indication was included in the SN release request message in Step 5.

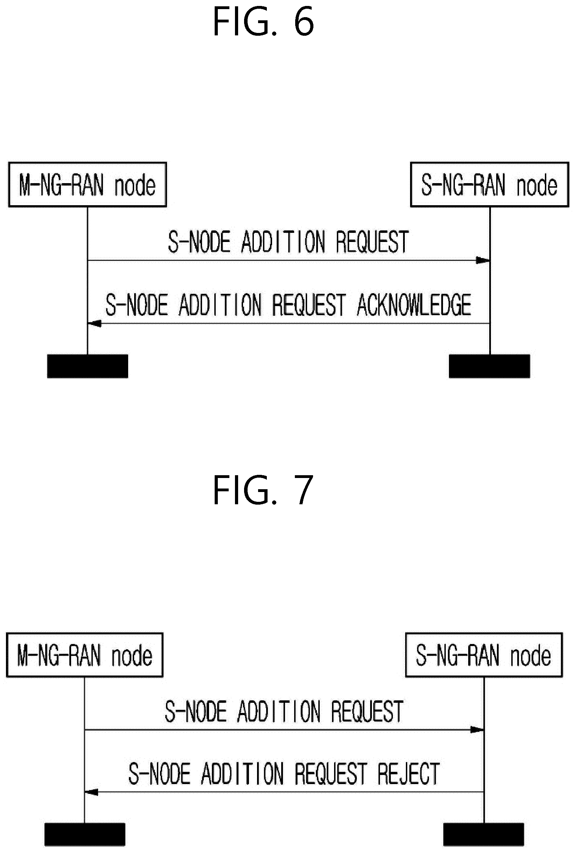

FIG. 6 illustrates an example of a successful procedure of S-NG-RAN node addition preparation, and FIG. 7 illustrates an example of an unsuccessful procedure of S-NG-RAN node addition preparation. S-NG-RAN node addition preparation is defined in the TS 38.423 specification document and is described as follows.

### 8.3.1 S-NG-RAN node addition preparation

### 8.3.1.1 General

The purpose of the S-NG-RAN node addition preparation procedure is to request the S-NG-RAN node to allocate resources for dual connectivity operation for a specific UE.

The procedure uses UE-associated signaling.

### 8.3.1.2 Successful operation

The M-NG-RAN node initiates the procedure by sending the S-NODE addition request message to the S-NG-RAN node.

When the M-NG-RAN node sends the S-NODE addition request message, it shall start the timer TXn.

The allocation of resources according to the values of the Allocation and Retention Priority IE included in the QoS Flow Level QoS Parameters IE for each QoS flow shall follow the principles specified for the PDU Session Resource Setup procedure in TS 38.413 [5].

The S-NG-RAN node shall choose the ciphering algorithm based on the information in the UE Security Capabilities IE and locally configured priority list of AS encryption algorithms and apply the key indicated in the S-NG-RAN node Security Key IE as specified in TS 33.501 [28].

If the TSC Traffic Characteristics IE is included for a QoS flow in the S-NODE addition request message, the S-NG-RAN node shall behave the same as the NG-RAN node in the PDU session resource Setup procedure, specified in TS 38.413 [5].

If the Additional QoS Flow Information IE is included for a QoS flow in the S-NODE addition request message, the S-NG-RAN node shall behave the same as the NG-RAN node in the PDU session resource setup procedure, specified in TS 38.413 [5].

For each GBR QoS flow, if the Alternative QoS Parameters Sets IE is included in the GBR QoS Flow Information IE, the S-NG-RAN node shall, if supported, behave the same as the NG-RAN node in the PDU Session Resource Setup procedure specified in TS 38.413 [5].

For each PDU session, if the Network Instance IE is included in the PDU Session Resource Setup Info - SN terminated IE contained in the PDU Session Resources To Be Added List IE and the Common Network Instance IE is not present, the S-NG-RAN node shall, if supported, use it when selecting transport network resource as specified in TS 23.501 [7].

For each GBR QoS flow, if the Offered GBR QoS Flow Information IE is included in the QoS Flows To Be Setup List IE contained in the PDU Session Resource Setup Info - SN terminated IE, the S-NG-RAN node may request the M-NG-RAN node to configure the DRB to which that QoS flow is mapped with MCG resources.

For each PDU session, if the Non-GBR Resources Offered IE is included in the PDU Session Resource Setup Info - SN terminated IE contained in the PDU Session Resources To Be Added List IE and set to "true", the S-NG-RAN node may request the M-NG-RAN node to configure DRBs to which non-GBR QoS flows of the PDU session are mapped with MCG resources.

For each PDU session, if the Common Network Instance IE is included in the PDU Session Resource Setup Info - SN terminated IE contained in the PDU Session Resources To Be Added List IE, the S-NG-RAN node shall, if supported, use it when selecting transport network resource as specified in TS 23.501 [7].

### Redundant transmission:

- For each PDU session, if the Redundant UL NG-U UP TNL Information at UPF IE is included in the PDU Session Resource Setup Info - SN terminated IE, the S-NG-RAN node shall, if supported, use it as the uplink termination point for the user plane data for this PDU session for the redundant transmission and it shall include the Redundant DL NG-U UP TNL Information at NG-RAN IE in the PDU Session Resource Setup Response Info - SN terminated IE as described in TS 23.501 [7].
- For each PDU session, if the Redundant Common Network Instance IE is included in the PDU Session Resource Setup Info - SN terminated IE the S-NG-RAN node shall, if supported, use it when selecting transport network resource for the redundant transmission as specified in TS 23.501 [7].
- For each PDU session for which the Redundant QoS Flow Indicator IE is include in QoS Flows To Be Setup List IE contained in the S-NODE addition request message, the S-NG-RAN node shall, if supported, store and use it as specified in TS 23.501 [7].
- For each PDU session, if the Redundant PDU Session Information IE is included in the PDU Session Resource Setup Info - SN terminated IE in the S-NODE addition request message, the S-NODE-RAN node shall, if supported, store the received information in the UE context and setup the redundant user plane resources for the concerned PDU session, as specified in TS 23.501 [7].
- For each PDU session resource successfully setup for which the Redundant PDU Session Information IE is included in the S-NODE addition request message, the S-NG-RAN node shall, if supported, include the Used RSN Information IE in the PDU Session Resource Setup Response Info - SN terminated IE in the S-NODE addition request acknowledge message. If the PDU Session Pair ID IE is included in the Redundant PDU Session Information IE, the S-NG-RAN node may store and use it to identify the paired PDU sessions.

If the S-NODE addition request message contains the Selected PLMN IE, the S-NG-RAN node may use it for RRM purposes.

If the S-NODE addition request message contains the Expected UE Behaviour IE, the S-NG-RAN node shall, if supported, store this information and may use it to optimize resource allocation.

If the S-NODE addition request message contains the Mobility Restriction List IE, the S-NG-RAN node, if supported, shall store this information and use it to select an appropriate SCG.

If the S-NODE addition request message contains the Index to RAT/Frequency Selection Priority IE, the S-NG-RAN node may use it for RRM purposes.

If the S-NG-RAN node is a gNB and the S-NODE addition request message contains the PCell ID IE, the S-NG-RAN node shall search for the target NR cell among the NR neighbour cells of the PCell indicated, as specified in the TS 37.340 [8].

If the S-NODE addition request message contains the S-NG-RAN node PDU Session Aggregate Maximum Bit Rate IE, the S-NG-RAN node may use it for RRM purposes.

If the S-NODE addition request message contains the MR-DC Resource Coordination Information IE, the S-NG-RAN node should forward it to lower layers and it may use it for the purpose of resource coordination with the M-NG-RAN node, or to coordinate with sidelink resources used in the M-NG-RAN node. The S-NG-RAN node shall consider the value of the received UL Coordination Information IE valid until reception of a new update of the IE for the same UE. The S-NG-RAN node shall consider the value of the received DL Coordination Information IE valid until reception of a new update of the IE for the same UE.

If the E-UTRA Coordination Assistance Information IE or the NR Coordination Assistance Information IE is contained in the MR-DC Resource Coordination Information IE, the S-NG-RAN node shall, if supported, use the information to determine further coordination of resource utilisation between the S-NG-RAN node and the M-NG-RAN node.

If the S-NODE addition request message contains the NE-DC TDM Pattern IE, the S-NG-RAN node should forward it to lower layers and use it for the purpose of single uplink transmission. The S-NG-RAN node shall consider the value of the received NE-DC TDM Pattern IE valid until reception of a new update of the IE for the same UE.

If the S-NODE addition request message contains the QoS Flow Mapping Indication IE, the S-NG-RAN node may take it into account that only the uplink or downlink QoS flow is mapped to the DRB.

For each bearer for which allocation of the PDCP entity is requested at the S-NG-RAN node:
- the M-NG-RAN node may propose to apply forwarding of downlink data by including the DL Forwarding IE within PDU Session Resource Setup Info - SN terminated IE of the S-NODE addition request message. For each bearer that it has decided to admit, the S-NG-RAN node may include the DL Forwarding GTP Tunnel Endpoint IE within the PDU Session Resource Setup Response Info - SN terminated IE of the S-NODE addition request acknowledge message to indicate that it accepts the proposed forwarding of downlink data for this bearer.
- the S-NG-RAN node may include for each bearer in the PDU Session Resource Setup Response Info - SN terminated IE the UL Forwarding GTP Tunnel Endpoint IE to indicates it request data forwarding of uplink packets to be performed for that bearer.
- the M-NG-RAN node shall include RLC Mode IE for each bearer offloaded from M-NG-RAN node to S-NG-RAN node in the DRBs to QoS Flow Mapping List IE within the PDU Session Resource Setup Info - SN terminated IE of the S-NODE addition request message, and the RLC Mode IE indicates the mode that the M-NG-RAN used for the DRB when it was hosted at the M-NG-RAN node.

For each bearer for which the PDCP entity is at the M-NG-RAN node:
- the M-NG-RAN node shall include the RLC mode IE for each bearer in the DRBs To Be Setup List IE within the PDU Session Resource Setup Info - MN terminated IE of the S-NODE addition request message to indicate the RLC mode has been configured at the M-NG-RAN node, so that the S-NG-RAN node shall configure the same RLC mode for this MN terminated split bearer.

The M-NG-RAN node may also propose to apply forwarding of UL data when offloading QoS flows for which in-order delivery is requested by including the UL Forwarding Proposal IE in the Data Forwarding and Offloading Info from source NG-RAN node IE within the PDU Session Resource Setup Info - SN terminated IE of the S-NODE addition request message. The S-NG-RAN node may include the PDU Session Level UL Data Forwarding UP TNL Information IE in the Data Forwarding Info from target NG-RAN node IE within the PDU Session Resource Setup Response Info - SN terminated IE of the S-NODE addition request acknowledge message to indicate that it accepts the proposed forwarding.

If the Masked IMEISV IE is contained in the S-NODE addition request message, the S-NG-RAN node shall, if supported, use it to determine the characteristics of the UE for subsequent handling.

If the UE Radio Capability ID IE is contained in the S-NODE addition request message, the S-NG-RAN node shall, if supported, store this information in the UE context and use it as defined in TS 23.501 [7] and TS 23.502 [13].

The S-NG-RAN node shall report to the M-NG-RAN node, in the S-NODE addition request acknowledge message, the result for all the requested PDU session resources in the following way:
- A list of PDU session resources which are successfully established shall be included in the PDU Session Resources Admitted To Be Added List IE.
- A list of PDU session resources which failed to be established shall be included in the PDU Session Resources Not Admitted List IE.

Upon reception of the S-NODE addition request acknowledge message, the M-NG-RAN node shall stop the timer TXn_{DCprep}.

If the S-NODE addition request acknowledge message contains the MR-DC Resource Coordination Information IE, the M-NG-RAN node may use it for the purpose of resource coordination with the S-NG-RAN node. The M-NG-RAN node shall consider the value of the received UL Coordination Information IE valid until reception of a new update of the IE for the same UE. The M-NG-RAN node shall consider the value of the received DL Coordination Information IE valid until reception of a new update of the IE for the same UE. If the E-UTRA Coordination Assistance Information IE or the NR Coordination Assistance Information IE is contained in the MR-DC Resource Coordination Information IE, the M-NG-RAN node shall, if supported, use the information to determine further coordination of resource utilisation between the M-NG-RAN node and the S-NG-RAN node.

The S-NG-RAN node may include for each bearer in the DRBs To Be Setup List IE in the S-NODE addition request acknowledge message the PDCP SN Length IE to indicate the PDCP SN length for that DRB.

If the S-NG-RAN node UE XnAP ID IE is contained in the S-NODE addition request message, the S-NG-RAN node shall, if supported, store this information and use it as defined in TS 37.340 [8].

If the S-NODE addition request message contains the PDCP SN Length IE, the S-NG-RAN node shall, if supported, store this information and use it for lower layer configuration of the concerned MN terminated bearer.

If the S-NODE addition request message contains the SN Addition Trigger Indication IE, the S-NG-RAN node shall include the RRC config indication IE in the S-NODE addition request acknowledge message to inform the M-NG-RAN node if the S-NG-RAN node applied full or delta configuration, as specified in TS 37.340 [8].

If the S-NODE addition request message contains the S-NG-RAN node Maximum Integrity Protected Data Rate Uplink IE or the S-NG-RAN node Maximum Integrity Protected Data Rate Downlink IE, the S-NG-RAN node shall use the received information when enforcing the maximum integrity protected data rate for the UE.

If the Security Indication IE is included in the PDU Session Resource Setup Info - SN terminated IE of the S-NODE addition request message, the behaviour of the S-NG-RAN node shall be the same as specified for the same IE in the PDU Session Resources To Be Setup List IE in the Handover Preparation procedure, for the concerned PDU session, and the S-NG-RAN node shall include the Security Result IE in the PDU Session Resource Setup Response Info - SN terminated IE.

If the Security Result IE is included in the PDU Session Resource Setup Info - SN terminated IE of the S-NODE addition request message, the S-NG-RAN node may take the information into account when deciding whether to perform user plane integrity protection or ciphering for the DRBs that it establishes for the concerned PDU session, except if the Split Session Indicator IE is included in the PDU Session Resource Setup Info - SN terminated IE and set to "split", in which case it shall perform user plane integrity protection or ciphering according to the information in the Security Result IE.

The S-NG-RAN node may take the information into account when deciding whether to perform user plane integrity protection or ciphering for the DRBs that it establishes for the concerned PDU session, except if the Split Session Indicator IE is included in the PDU Session Resource Setup Info - SN terminated IE and set to "split", in which case it shall perform user plane integrity protection or ciphering according to the information in the Security Result IE. If the S-NG-RAN node is an ng-eNB, it shall reject all PDU sessions for which the Integrity Protection Indication IE is set to "required" as specified in TS 33.501 [28]. If either the S-NG-RAN node or the M-NG-RAN node is an ng-eNB, the S-NG-RAN node shall behave according to clause 6.10.4 of TS 33.501 [28] for PDU sessions for which the Integrity Protection Indication IE is set to "preferred".

The S-NG-RAN node may include the Location Information at S-NODE IE in the S-NODE addition request acknowledge message, if respective information is available at the S-NG-RAN node.

If the Location Information at S-NODE Reporting IE set to "pscell" is included in the S-NODE addition request, the S-NG-RAN node shall, start providing information about the current location of the UE. If the Location Information at S-NODE IE is included in the S-NODE addition request acknowledge, the M-NG-RAN node shall store the included information so that it may be transferred towards the AMF.

If the Default DRB Allowed IE is included in the PDU Session Resource Setup Info - SN terminated IE of the S-NODE addition request message and set to "true", the S-NG-RAN node may configure the default DRB for the PDU session.

If the S-NODE addition request acknowledge message includes the DRB IDs taken into use IE, the M-NG-RAN node, if applicable, shall act as specified in TS 37.340 [8].

If Trace Activation IE has previously been received for this UE, it shall be included in the S-NODE addition request message. If the Trace Activation IE is included in the S-NODE addition request message, the S-NG-RAN node shall, if supported, initiate the requested trace function as described in TS 32.422 [23].

If the Trace Activation IE is included in the S-NODE addition request message which includes
- the MDT Activation IE set to "Immediate MDT and Trace", then the S-NG-RAN node shall if supported, initiate the requested trace session and MDT session as described in TS 32.422 [23].
- the MDT Activation IE set to "Immediate MDT Only", the S-NG-RAN node shall, if supported, initiate the requested MDT session as described in TS 32.422 [23] and the S-NG-RAN node shall ignore the Interfaces To Trace IE, and the Trace Depth IE.
- the MDT Location Information IE, within the MDT Configuration IE, the S-NG-RAN node shall, if supported, store this information and take it into account in the requested MDT session.
- the MDT Activation IE set to "Immediate MDT Only", and if the Signaling based MDT PLMN List IE is included in the MDT Configuration IE, the S-NG-RAN node may use it to propagate the MDT Configuration as described in TS 37.320 [43].
- the Bluetooth Measurement Configuration IE, within the MDT Configuration IE, the S-NG-RAN node shall, if supported, take it into account for MDT Configuration as described in TS 37.320 [43].
- the WLAN Measurement Configuration IE, within the MDT Configuration IE, the S-NG-RAN node shall, if supported, take it into account for MDT Configuration as described in TS 37.320 [43].
- the Sensor Measurement Configuration IE, within the MDT Configuration IE, the S-NG-RAN node shall take it into account for MDT Configuration as described in TS 37.320 [43].
- the MDT Configuration IE and if the S-NG-RAN node is a gNB at least the MDT Configuration-NR IE shall be present, while if the S-NG-RAN Node is an ng-eNB at least the MDT Configuration-EUTRA IE shall be present.

If the Requested Fast MCG recovery via SRB3 IE set to "true" is included in the S-NODE addition request message and the S-NG-RAN node decides to configure fast MCG link recovery via SRB3 as specified in TS 37.340 [8], the S-NG-RAN node shall, if supported, include the Available fast MCG recovery via SRB3 IE set to "true" in the S-NODE addition request acknowledge message.

If the QoS Monitoring Request IE is included in the QoS Flow Level QoS Parameters IE for a QoS flow contained in the DRBs To Be Setup List IE of the PDU Session Resource Setup Info - MN terminated IE, the S-NG-RAN node shall, if supported, use it to configure lower layers for the purpose of delay measurement and QoS monitoring as specified in TS 23.501 [7]. If the QoS Monitoring Reporting Frequency IE is included in the QoS Flow Level QoS Parameters IE for a QoS flow contained in the DRBs To Be Setup List IE of the PDU Session Resource Setup Info - MN terminated IE, the S-NG-RAN node shall, if supported, use it for RAN part delay reporting.

For each QoS flow which has been successfully established in the S-NG-RAN node, if the QoS Monitoring Request IE was included in the QoS Flow Level QoS Parameters IE contained in the PDU Session Resource Setup Info - SN terminated IE, the S-NG-RAN node shall store this information, and shall, if supported, perform delay measurement and QoS monitoring as specified in TS 23.501 [7]. If the QoS Monitoring Reporting Frequency IE was included in the QoS Flow Level QoS Parameters IE contained in the PDU Session Resource Setup Info - SN terminated IE, the S-NG-RAN node shall store this information, and shall, if supported, use it for RAN part delay reporting. In case such a QoS flow is included in the DRBs To Be Setup List IE of the PDU Session Resource Setup Response Info - SN terminated IE, the M-NG-RAN node shall, if supported, use it to configure lower layers for the purpose of delay measurement and QoS monitoring. If the QoS Monitoring Reporting Frequency IE is included in the DRBs To Be Setup List IE of the PDU Session Resource Setup Response Info - SN terminated IE, the M-NG-RAN node shall, if supported, use it for RAN part delay reporting.

For each DRB configured as MN-terminated split bearer/SCG bearer, if the QoS Mapping Information IE is included in the DRBs Admitted List IE in the PDU Session Resource Setup Response Info - MN terminated IE of the S-NODE addition request acknowledge message, the M-NG-RAN node shall, if supported, use it to set DSCP and/or IPv6 flow label fields for the downlink IP packets which are transmitted from M-NG-RAN node to S-NG-RAN node through the GTP tunnels indicated by the UP Transport Layer Information IE.

If the Source NG-RAN Node ID IE is included in the S-NODE addition request message, the S-NG-RAN node shall, if supported, use it to decide the direct data path availability with the indicated source NG-RAN node, and if the direct data forwarding path is available, include the Direct Forwarding Path Availability IE in the S-NODE addition request acknowledge message.

If for a given QoS Flow the Source DL Forwarding IP Address IE or both, the Source DL Forwarding IP Address IE and the Source Node DL Forwarding IP Address IE are included within the Data Forwarding and Offloading Info from source NG-RAN node IE in the PDU Session Resource Setup Info - SN terminated IE contained in the S-NODE addition request message, the S-NG-RAN node shall, if supported, store this information and use it as part of its ACL functionality configuration actions, if such ACL functionality is deployed.

If for a given QoS Flow the Source DL Forwarding IP Address IE is included within the QoS Flows Mapped To DRB List IE in the PDU Session Resource Setup Response Info - SN terminated IE contained in the S-NODE addition request acknowledge message, the M-NG-RAN node shall, if supported, store this information and use it as part of its ACL functionality to identify source TNL address for data forwarding in case of subsequent handover preparation, if such ACL functionality is deployed.

If the Management Based MDT PLMN List IE is contained in the S-NODE addition request message, the S-NG-RAN node shall, if supported, store the received information in the UE context, and use this information to allow subsequent selection of the UE for management based MDT defined in TS 32.422 [23].

Upon reception of the S-NODE addition request message, the S-NG-RAN node shall, if supported, start collecting SCG information and continue for as long as the UE stays in one of its cells.

If the UE History Information from the UE IE is included in the S-NODE addition request message, the S-NG-RAN node shall, if supported, store this information.

If the PSCell Change History IE set to "reporting full history" is included in the S-NODE addition request message, the S-NG-RAN node shall, if supported, signal the latest SCG UE History Information upon each PSCell change, to the M-NG-RAN node, using the S-NG-RAN node initiated S-NG-RAN node Modification procedure.

If the IAB Node Indication IE is contained in the S-NODE addition request message, the S-NG-RAN node shall, if supported, consider that dual connectivity operation is requested for an IAB-node. In addition:

- If the No PDU Session Indication IE is contained in the S-NODE addition request message, the S-NG-RAN node shall, if supported, consider the UE as an IAB-node which does not have any PDU sessions activated, and ignore the PDU Session Resources To Be Added List IE, and shall not take any action with respect to PDU session setup. Subsequently, the M-NG-RAN node shall, if supported, ignore the PDU Session Resources Admitted To Be Added List IE in the S-NODE addition request acknowledge message.
- If the F1-terminating IAB-donor Indicator IE is contained in the S-NODE addition request message, the S-NG-RAN node shall, if supported, assume that it will become the F1-terminating IAB-donor of the IAB-node, and act as described in TS 38.401 [2].

If the CHO Information SN Addition IE is included in the S-NODE addition request message, the S-NG-RAN node shall consider that the S-NG-RAN node addition preparation procedure has been triggered as part of a conditional handover. It may use the Source M-NG-RAN node ID IE and the Source M-NG-RAN node UE XnAP ID IE to identify other active S-NG-RAN node addition preparations related to this UE. If the Estimated Arrival Probability IE is contained in the CHO Information SN Addition IE included in the S-NODE addition request message, then the S-NG-RAN node may use the information to allocate necessary resources for the UE.

If the SCG Activation Request IE is included in the S-NODE addition request message, the S-NG-RAN node may use it to configure SCG resources as specified in TS 37.340 [8], and shall, if supported, include the SCG Activation Status IE in the S-NODE addition request acknowledge message. If the SCG Activation Request IE in the S-NODE addition request message is set to "Activate SCG", the S-NG-RAN node shall, if supported, activate the SCG resources and set the SCG Activation Status IE in the S-NODE addition request acknowledge message to "SCG activated".

If the Conditional PSCell Addition Information Request IE is included in the S-NODE addition request message, the S-NG-RAN node shall, if supported, consider that the request concerns CPAC, as described in TS 37.340 [8]. Accordingly, the S-NG-RAN node shall, if supported, include the Conditional PSCell Addition Acknowledge IE in the S-NODE addition request acknowledge message.

If the Conditional PSCell Addition Information Acknowledge is included in the S-NODE addition request acknowledge message, the M-NG-RAN node shall, if supported, shall, if supported, consider the indicated PSCells are selected by the target SN as candidate PSCells for CPAC.

If the CG-CandidateList is included in the S-NG-RAN node to M-NG-RAN node Container IE in the S-NODE addition request acknowledge message, the M-NG-RAN node shall, if supported, use it for the purpose of CPAC.

If the Estimated Arrival Probability IE is contained in the Conditional PSCell Addition Information Request IE included in the S-NODE addition request message, then the candidate target S-NG-RAN node may use the information to allocate necessary resources for the incoming CPAC procedure.

If the S-NG-RAN node UE Slice Maximum Bit Rate IE for a specific S-NSSAI is included in the S-NODE addition request message, the S-NG-RAN node shall, if supported, store and use the received S-NG-RAN node UE Slice Maximum Bit Rate for all PDU sessions associated with the S-NSSAI for the concerned UE as defined in TS 23.501 [7].

### Interactions with the S-NG-RAN node Reconfiguration Completion procedure:

If the S-NG-RAN node admits at least one PDU session resource, the S-NG-RAN node shall start the timer TXn when sending the S-NODE addition request acknowledge message to the M-NG-RAN node except for a CPAC request. The reception of the S-NODE reconfiguration complete message shall stop the timer TXn_{DCoverall} if TXn_{DCoverall} is running.

### Interaction with the Activity Notification procedure

Upon receiving an S-NODE addition request message containing the Desired Activity Notification Level IE, the S-NG-RAN node shall, if supported, use this information to decide whether to trigger subsequent Activation Notification procedures according to the requested notification level.

### 8.3.1.3 Unsuccessful operation

If the S-NG-RAN node is not able to accept any of the bearers or a failure occurs during the S-NG-RAN node addition preparation, the S-NG-RAN node sends the S-NODE addition request reject message with an appropriate cause value to the M-NG-RAN node.

### 8.3.1.4 Abnormal conditions

If the S-NG-RAN node receives an S-NODE addition request message containing in a PDU Session Resource To Be Added Item IE neither the PDU Session Resource Setup Info - SN terminated IE nor the PDU Session Resource Setup Info - MN terminated IE, the S-NG-RAN node shall fail the S-NG-RAN node addition preparation procedure indicating an appropriate cause.

If the supported algorithms for encryption defined in the NR Encryption Algorithms IE in the NR UE Security Capabilities IE, plus the mandated support of NEA0 in all UEs (TS 33.501 [28]), do not match any algorithms defined in the configured list of allowed encryption algorithms in the S-NG-RAN node (TS 33.501 [28]), the S-NG-RAN node shall reject the procedure using the S-NODE addition request reject message.

If the supported algorithms for integrity defined in the NR Integrity Protection Algorithms IE in the NR UE Security Capabilities IE do not match any algorithms defined in the configured list of allowed integrity protection algorithms in the S-NG-RAN node (TS 33.501 [28]), the S-NG-RAN node shall reject the procedure using the S-NODE addition request reject message.

If the S-NG-RAN node receives an S-NODE addition request message containing a S-NG-RAN node UE XnAP ID IE that does not match any existing UE Context that has such ID, the S-NG-RAN node shall reject the procedure using the S-NODE addition request reject message.

If the M-NG-RAN node receives an S-NODE addition request acknowledge message containing a value for PDU Session ID in PDU Session Resources Admitted List IE and in PDU Session Resources Not Admitted List IE, the M-NG-RAN node shall regard setup of S-NG-RAN node resources of that PDU Session as being failed.

If the S-NG-RAN node receives an S-NODE addition request message containing, for a PDU session, a PDU Session Resource Setup Info - SN terminated IE for which the Split Session Indicator IE is included and set to "split", the Security Result IE is not included, and either the Integrity Protection Indication IE or the Confidentiality Protection Indication IE is set to "preferred", it shall reject the PDU session.

### Interaction with the M-NG-RAN node initiated S-NG-RAN node Release procedure:

If the M-NG-RAN node receives an S-NODE ADDITION REQUEST ACKNOWLEDGE message containing in a PDU Session Resource Admitted To Be Added Item IE neither the PDU Session Resource Setup Response Info - SN terminated IE nor the PDU Session Resource Setup Response Info - MN terminated IE, the M-NG-RAN node shall trigger the M-NG-RAN node initiated S-NG-RAN node Release procedure indicating an appropriate cause.

If the timer TXn_{DCprep} expires before the M-NG-RAN node has received the S-NODE addition request acknowledge message, the M-NG-RAN node shall regard the S-NG-RAN node Addition Preparation procedure as being failed and shall trigger the M-NG-RAN node initiated S-NG-RAN node Release procedure.

### Interactions with the S-NG-RAN node Reconfiguration Completion and S-NG-RAN node initiated S-NG-RAN node release procedure:

If the timer TXn_{DCoverall} expires before the S-NG-RAN node has received the S-NODE reconfiguration complete or the S-NODE release request message, the S-NG-RAN node shall regard the requested RRC connection reconfiguration as being not applied by the UE and shall trigger the S-NG-RAN node initiated S-NG-RAN node release procedure.

### Specific embodiments of the present disclosure

The present disclosure relates to an apparatus and method for supporting data forwarding between network nodes in a wireless communication system. Specifically, the present disclosure relates to an apparatus and method for supporting data forwarding for a subsequent Conditional Primary Secondary Cell (PSCell) Addition or Change (CPAC) procedure in a wireless communication system.

According to Rel-18 network mobility enhancement Work Item (WI) , the following has been captured to support subsequent CPAC without reconfiguration or re-initialization of CPAC configurations from the network.

### 3. Justification

When the UE moves from the coverage area of one cell to another cell, at some point a serving cell change needs to be performed. Currently serving cell change is triggered by L3 measurements and is done by RRC signaling triggered reconfiguration with synchronization for change of PCell and PSCell, as well as release add for SCells when applicable. All cases involve complete L2 (and L1) resets, leading to longer latency, larger overhead and longer interruption time than beam switch mobility. The goal of L1/L2 mobility enhancements is to enable a serving cell change via L1/L2 signaling, in order to reduce the latency, overhead and interruption time.

In Rel-17 Conditional PSCell change (CPC)/Conditional PSCell addition (CPA), a CPC/CPA-configured UE has to release the CPC/CPA configurations when completing random access towards the target PSCell. Hence the UE does not have a chance to perform subsequent CPC/CPA without prior CPC/CPA reconfiguration and re-initialization from the network. This will increase the delay for the cell change and increase the signaling overhead, especially in the case of frequent SCG changes when operating FR2. Therefore, MR-DC with selective activation of cell groups aims at enabling subsequent CPC/CPA after SCG change, without reconfiguration and re-initialization on the CPC/CPA preparation from the network. This results in a reduction of the signaling overhead and interrupting time for SCG change.

Currently, CHO and MR-DC cannot be configured simultaneously. This limits the usefulness of these two features when MR-DC is configured. If it is not completed in Rel-17, Rel-18 should specify mechanisms for CHO and MR-DC to be configured simultaneously. However, this alone may not be sufficient to optimize MR-DC mobility, as the radio link quality of the conditionally-configured PSCell may not be good enough or may not be the best candidate PSCell when the UE accesses the target PCell, and this may impact the UE throughput. To mitigate this throughput impact, Rel-18 CHO+MRDC can consider CHO including target MCG and multiple candidate SCGs for CPC/CPA.

### 4. Objective

### 4.1. Objective of SI or Core part WI or Testing part WI

The detailed objective of this work item are:
1. To specify mechanism and procedures of L1/L2 based inter-cell mobility for mobility latency reduction:
   - Configuration and maintenance for multiple candidate cells to allow fast application of configurations for candidate cells [RAN2, RAN3]
      ∘ Dynamic switch mechanism among candidate serving cells (including SpCell and SCell) for the potential applicable scenarios based on L1/L2 signaling [RAN2, RAN1]
      ∘ L1 enhancements for inter-cell beam management, including L1 measurement and reporting, and beam indication [RAN1, RAN2]
   - Note 1: Early RAN2 involvement is necessary, including the possibility of further clarifying the interaction between this bullet with the previous bullet
   - Note 2: Only SSB-based L1 measurement is supported in this release.
      ∘ Timing advance management [RAN1, RAN2]
      ∘ CU-DU interface signaling to support L1/L2 mobility, if needed [RAN3]
         Note 3: FR2 specific enhancements are not precluded, if any.
         Note 4: The procedure of L1/L2 based inter-cell mobility are applicable to the following scenarios:
   - Standalone, CA and NR-DC case with serving cell change within one CG, prioritizing MCG
   - Intra-DU case and intra-CU inter-DU case (applicable for standalone and CA: no new RAN interfaces are expected)
   - Both intra-frequency and inter-frequency
   - Both FR1 and FR2
   - Source and target cells may be synchronized or non-synchronized
2. To specify mechanism and procedures of NR-DC with selective activation of the cell groups (at least for SCG) via L3 enhancements:
   ∘ To allow subsequent cell group change after changing CG without reconfiguration and re-initiation of CPC/CPA [RAN2, RAN3, RAN4]
      Note 5: A harmonized RRC modelling approach for objectives 1 and 2 could be considered to minimize the workload in RAN2.
3. For CHO including target MCG and target SCG in NR-DC [RAN3]:
   ∘ to specify data forwarding optimizations; and
   ∘ to specify, if needed, a solution to avoid unnecessary signaling exchange between source MN and target SN.
4. To specify CHO including target MCG and candidate SCGs for CPC/CPA in NR-DC [RAN3, RAN2]
   ∘ CHO including target MCG and target SCG is used as the baseline
5. To specify RRM core requirements for the following, as necessary [RAN4]:
   ∘ L1/L2-based inter-cell mobility
   ∘ Enhanced CHO configurations addressed by this WI
6. To specify RF requirements to cover inter-frequency L1/L2-based mobility, as necessary [RAN4].
7. To study and specify how to reuse the IDLE/INACTIVE mode measurement results which are to be reported during and/or after RRC connection setup/resume in order to improve SCell/SCG setup delay [RAN4, RAN2], including:
   ∘ Availability and validation of the IDLE/INACTIVE mode measurement results to be reported [RAN4]; and
   ∘ Definition of corresponding RRM requirements [RAN4]; and
   ∘ If necessary based on RAN4 outcome, definition of corresponding signaling support [RAN2].
      Note 6: RAN4 will coordinate in due course with RAN2 to start the work.
      Note 7: R4-2220415 serves as baseline for future work in RAN4
      Note 8: With exception of the above scenarios, enhancements on IDLE/INACTIVE mode measurements and on UE behavior in IDLE/INACTIVE mode are not in scope.

As described above, CPAC configurations prepared on the network side and configured to the UE are not used only once. That is, CPAC configurations may be reused for subsequent CPAC operations after CPAC is executed, with the purpose of reducing signaling overhead and interruption time for SCG change in FR2.

However, simply reusing CPAC configuration causes new problems for data forwarding. This is because the Secondary Node (SN) corresponding to the PSCell selected during the UE's initial CPAC execution becomes the new serving SN, and that SN serves as a source for data forwarding of at least one other candidate SN. In Rel-17, conditional configuration is used only once. That is, according to Rel-17, the conditional configuration is released at the UE and network side upon CPAC execution. This means that from the network perspective, when early data forwarding is applied, only data forwarding from the serving node to candidate target node(s) before execution needs to be considered, and when late data forwarding is applied, only data forwarding to the selected target node needs to be considered. However, in subsequent CPAC currently being developed in Rel-18, PSCells selected upon CPAC execution may continue to change over time. Therefore, the network need to not only forward data originating from one SN but also handle forwarding of data originating from another SN at the next time point.

In this case, reusing the same forwarding transport network layer addresses (TNLs) allocated by the MN and/or candidate SNs during CPAC preparation may cause the following problems:
(1) Since 4G LTE, the principle of data forwarding between network nodes is that for Downlink (DL), the source node proposes data forwarding and the target node decides whether to accept it. During CPAC preparation, other candidate SNs may allocate forwarding TNLs (e.g., target GPRS Tunneling Protocol - User Plane Tunnel Endpoint Identifier (GTP-U TEID), and/or target IP address) based on the source SN's DL forwarding proposal. After CPAC is executed and one candidate SN among candidate SNs other than the source SN becomes the new serving SN, if the new serving SN reuses the same forwarding TNLs for subsequent data forwarding operations, this principle is violated. This is because those TNLs are not allocated based on the new serving SN's data forwarding proposal, but were allocated based on the original source SN's data forwarding proposal.
(2) Early data forwarding operations may be problematic. For example, assume there are three SNs (e.g., source SN, candidate SN1, and candidate SN2). Here, a source SN terminated Data Radio Bearer (DRB) is admitted at candidate SN1 and candidate SN2 without configuration change, and DRB level data forwarding is accepted. When CPAC is successfully configured to the UE, the source SN can perform early data forwarding to other candidate SNs for that DRB. If candidate SN1 becomes the new serving SN after CPAC is executed, the new serving SN candidate SN1 can perform early data forwarding to candidate SN2 for that DRB. If the same forwarding TNLs allocated by candidate SN2 for that DRB during the CPAC preparation phase are reused for the data forwarding operation of the new serving SN candidate SN1, there is a possibility that packets forwarded early from candidate SN1 will arrive at candidate SN2 together with some packets forwarded early from the source SN. Of course, early data forwarding from the source SN is stopped as CPAC is executed and candidate SN1 becomes the new serving SN. However, packets forwarded early from the source SN before being stopped may arrive at candidate SN2 at a later time when candidate SN1 starts early data forwarding to candidate SN2 for that DRB. That is, DL PDCP SDUs with SNs assigned by the source SN and DL PDCP SDUs with SNs assigned by candidate SN1 may arrive on the same forwarding TNLs allocated by candidate SN2. At this time, packets delivered from the source SN are discardable, and packets delivered from the new serving SN candidate SN1 should not be discarded unless indicated by early status transfer from candidate SN1. However, candidate SN2 cannot know which of the packets arriving through the same forwarding TNLs were delivered from the source SN and which were delivered from candidate SN1. Candidate SN2 could verify whether a packet was forwarded from the source SN or from candidate SN1 by decoding the source IP address of the received forwarded packet and comparing it with the source IP address of packets received from the source SN. However, in current data forwarding operations, verifying the source of each delivered packet is not considered at all, which could impose a burden of increasing implementation complexity.

Therefore, the present disclosure proposes mechanisms for performing data forwarding operations between candidate SNs in subsequent CPAC. Specifically, the present disclosure proposes a method by which early data forwarding or late data forwarding operations can be perfectly performed between candidate SNs during subsequent CPAC procedures for a UE.

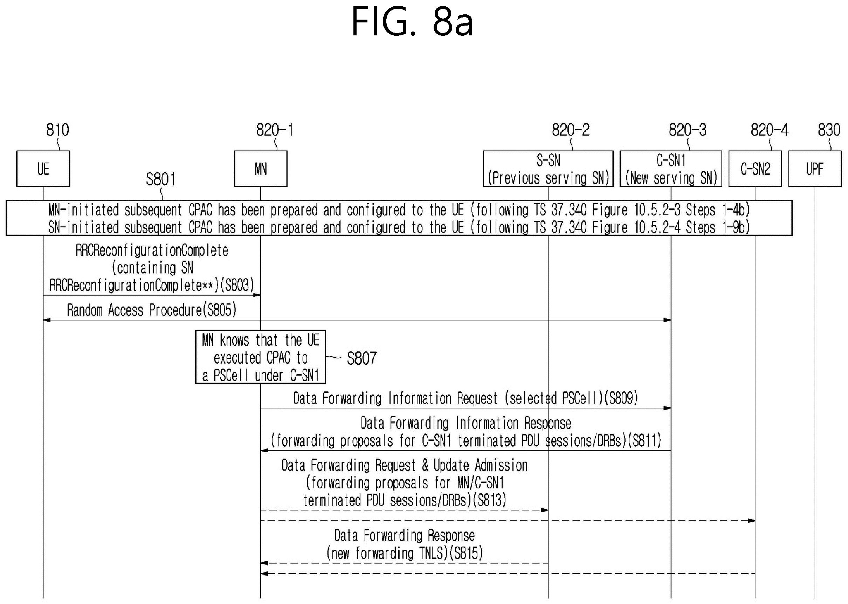

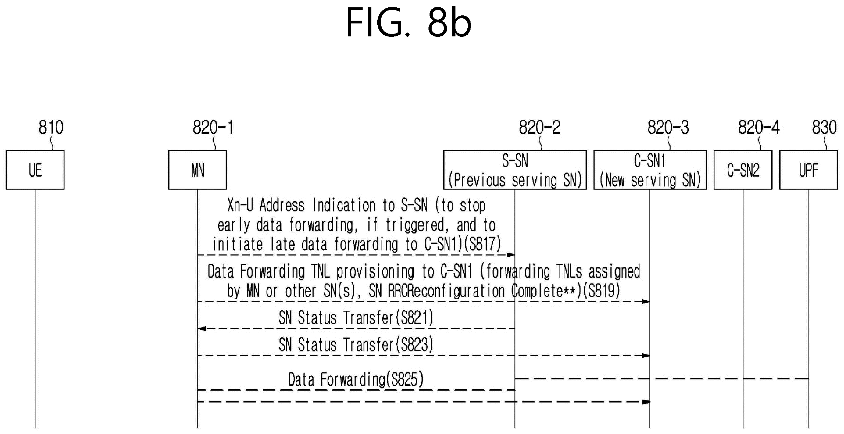

FIG. 8a and FIG. 8b illustrate an example of a data forwarding support procedure for a subsequent CPAC according to an embodiment of the present disclosure. FIG. 8a and FIG. 8b assume a case where UE 810 executes CPAC and the serving SN is changed from source-SN (S-SN) 820-2 to candidate-SN (C-SN) 820-3. S-SN 820-2 may be referred to as the previous serving SN, and C-SN1 820-3 may be referred to as the new serving SN.

Referring to FIGS. 8a and 8b, in step S801, preparation and UE configuration procedures for subsequent CPAC initiated by the MN or SN may be performed. The subsequent CPAC preparation and UE configuration procedures may include SN addition procedures and UE reconfiguration procedures. According to an embodiment, the preparation and UE configuration procedures for subsequent CPAC may be configured similarly to Rel-17 CPAC.

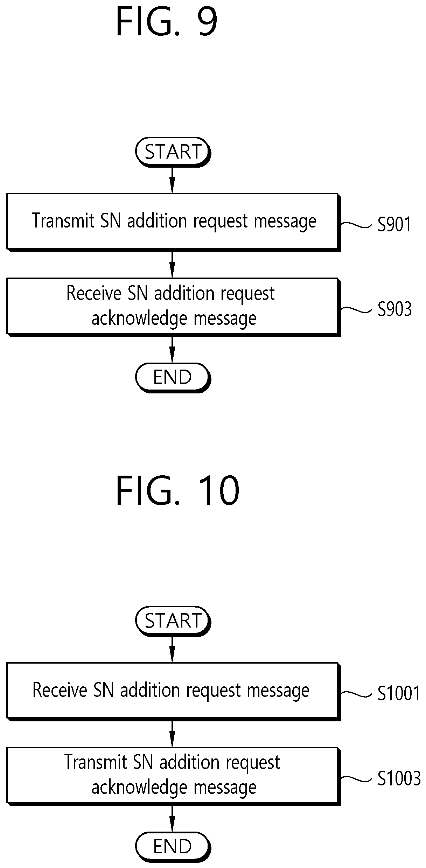

The preparation and UE configuration procedures for subsequent CPAC initiated by the MN may include steps 1 to 4b of FIG. 10.5.2-3 of TS 37.340. For example, the subsequent CPAC preparation and UE configuration procedures initiated by the MN include: step 1 where the MN transmits an SN addition request message to at least one candidate SN, step 2 where at least one candidate SN transmits an SN addition request acknowledgement message to the MN, step 2a where the MN provides an Xn-U address indication message including Xn-U DL TNL address information to the candidate SN for SN terminated bearers using MCG resources, step 3 where an RRC reconfiguration message including conditional PSCell Change (CPC) configuration is transmitted to the UE, step 4 where the UE applies the RRC reconfiguration message and transmits an RRC reconfiguration complete message to the MN, and step 4a where the MN informs the source SN that CPC has been configured through the Xn-U address indication procedure.

In steps 1 and 2, the MN requests candidate SNs to allocate resources for the UE through the SN addition procedure to initiate conditional SN change, and indicates that the request is for CPAC. Additionally, the MN provides candidate cells recommended by the MN based on recent measurement results for candidate SNs to select and configure SCG cells, and provides an upper limit on the number of PSCells that candidate SNs can prepare. The candidate SN determines a list of PSCells to be prepared within the list of candidate cells indicated by the MN, and for each prepared PSCell, the candidate SN determines other SCG SCells and provides new corresponding SCG radio resource configuration to the MN through an NR RRCReconfiguration** message included in the SN addition request acknowledgement message along with prepared PSCell IDs. If data forwarding is needed, the candidate SN provides data forwarding addresses to the MN. The candidate SN includes full or delta RRC configuration indication. At this time, the candidate SN may accept or reject each candidate cell listed in the measurement results indicated by the MN, but cannot configure alternative candidates.

In step 3, the RRC reconfiguration message transmitted to the UE includes CPC configuration, i.e., an RRCReconfiguration* message list and related execution conditions. Each RRCReconfiguration* message includes SCG configuration and possible MCG configuration of the RRCReconfiguration** message received from the candidate SN. The RRC reconfiguration message may also include updated MCG configuration for necessary conditional measurement configuration.

In step 4, the UE stores the CPC configuration included in the RRC reconfiguration message and transmits an RRC reconfiguration complete message to the MN. If the UE cannot comply with at least some configurations included in the RRC reconfiguration message, the UE may perform a reconfiguration failure procedure.

In step 4a, the source SN may start early status transfer procedures and early data forwarding, and PDCP SDU delivery may occur during early data forwarding.

The preparation and UE configuration procedures for subsequent CPAC initiated by the SN may include steps 1 to 9b of FIG. 10.5.2-4 of TS 37.340. For example, the subsequent CPAC preparation and UE configuration procedures initiated by the SN include: step 1 where the source SN requests SN change from the MN, step 2 where the MN transmits an SN addition request message to at least one candidate SN, step 3 where at least one candidate SN transmits an SN addition request acknowledgement message to the MN, step 3a where the MN provides an Xn-U address indication message including Xn-U DL TNL address information to the candidate SN for SN terminated bearers using MCG resources, step 4 where the MN transmits an SN modification request message to the source SN, step 5 where the source SN transmits an SN modification request acknowledgement message to the MN, step 6 where an RRC reconfiguration message including conditional PSCell Change (CPC) configuration is transmitted to the UE, step 7 where the UE applies the RRC reconfiguration message and transmits an RRC reconfiguration complete message to the MN, step 8 where the MN transmits an SN change confirm message to the source SN, step 9a where the source SN transmits a message indicating that SN modification is needed to the MN, and step 9b where the MN transmits an RRC reconfiguration message to the UE.

In step 1, the source SN initiates a conditional SN change procedure by transmitting an SN change required message including CPC initiation indication to the MN. The SN change required message may include candidate node IDs, SCG configuration (for delta configuration support), measurement results for cells that are not CPC candidates, and a proposed PSCell candidate list recommended by the source SN. The proposed PSCell candidate list may include execution conditions, an upper limit on the number of PSCells each candidate SN can prepare, and SCG measurement configuration for CPC (e.g., measurement IDs to be used for CPC).

In steps 2 and 3, the MN requests each candidate SN to allocate resources for the UE through the SN addition procedure, and indicates that the request is for CPAC. At this time, the SN addition request message may include measurement results received from the source SN and the proposed PSCell candidate list. The candidate SN determines the PSCell list to prepare within the source proposed PSCell list, determines SCG SCells for each prepared PSCell, and provides new corresponding SCG radio resource configuration to the MN through an NR RRCReconfiguration** message included in the SN addition request acknowledgement message. If data forwarding is needed, the candidate SN provides data forwarding addresses to the MN. At this time, the candidate SN includes full or delta RRC configuration indication and a prepared PSCell ID list for the MN. The candidate SN may accept or reject each candidate cell proposed by the source SN, but cannot configure alternative candidates.

In steps 4 and 5, before configuring the UE, the MN may indicate candidate PSCells accepted by each candidate SN to the source SN using an SN modification request message. For example, if the candidate SN has not accepted all candidate PSCells proposed by the source SN, candidate PSCell information accepted by the candidate SN may be informed to the source SN. Upon receiving the SN modification request message, the source SN may provide updated measurement configuration and/or execution conditions to the MN. Steps 4 and 5 may be omitted.

In step 6, the RRC reconfiguration message transmitted to the UE includes CPC configuration, i.e., an RRCReconfiguration* message list and related execution conditions. Each RRCReconfiguration* message includes SCG configuration and possible MCG configuration of the RRCReconfiguration** message received from the candidate SN. The RRC reconfiguration message may also include an NR RRCReconfiguration*** message generated at the source SN and updated MCG configuration for necessary conditional measurement configuration.

In step 7, the UE stores the CPC configuration included in the RRC reconfiguration message and transmits an RRC reconfiguration complete message to the MN. The RRC reconfiguration complete message may include an NR RRCReconfigurationComplete*** message. If the UE cannot comply with at least some configurations included in the RRC reconfiguration message, the UE may perform a reconfiguration failure procedure. In step 8, the MN may inform the source SN of the SN RRCReconfigurationComplete*** message using an SN change confirm message. If steps 4 and 5 are omitted, the SN change confirm message may include information related to candidate PSCells accepted by each candidate SN. The MN sends an SN change confirm message to indicate to the source SN that CPC has been prepared, in which case the source SN continues to provide user data to the UE. If early data forwarding is applied, the MN informs the source SN of data forwarding addresses received from candidate SN(s), and if applicable, the source SN may start early data forwarding together with early status transfer procedures. PDCP SDU delivery may occur during early data delivery. If multiple candidate SNs are prepared, the MN includes a target SN ID list and data delivery address list for the source SN.

In steps 9a and 9b, the source SN may transmit an SN modification required message to the MN to trigger updates of CPC execution conditions and/or corresponding SCG measurement configuration for CPC. In this case, the MN may reconfigure the UE.

After the subsequent CPAC preparation and UE configuration procedures initiated by the MN or SN as described above are performed, in step S803, UE 810 transmits an RRC reconfiguration complete* message to MN 820-1. The RRC reconfiguration complete message may include SN identification information of the selected candidate PSCell and an SN RRC reconfiguration complete** message for the selected candidate PSCell. At this time, the candidate PSCell may be selected based on execution conditions for CPAC. Specifically, UE 810 may identify multiple candidate PSCells based on CPAC configuration and check whether CPAC execution conditions for the multiple candidate PSCells are satisfied. If the execution condition of any one candidate PSCell among the multiple candidate PSCells is satisfied, UE 810 may select that candidate PSCell. UE 810 may apply an RRC reconfiguration message corresponding to the selected candidate PSCell and transmit an RRC reconfiguration complete message including an SN RRC reconfiguration complete message corresponding to the selected candidate PSCell and SN identification information of the selected candidate PSCell to MN 820-1.

In step S805, UE 810 performs a random access procedure for C-SN1 820-3 to which the selected PSCell belongs. That is, UE 810 may perform synchronization with the selected PSCell.

In step S807, MN 820-1 confirms that CPAC has been executed for the PSCell belonging to C-SN1 820-3 of UE 810 based on the RRC reconfiguration complete message. At this time, MN 820-1 may recognize that C-SN1 820-3 is the new serving SN. For example, MN 820-1 may confirm that C-SN1 820-3 has been selected as the new serving SN of UE 810 based on at least one of SN identification information of the selected candidate PSCell or the SN RRC reconfiguration complete message corresponding to the selected candidate PSCell included in the RRC reconfiguration complete message.

In step S809, MN 820-1 transmits a data forwarding information request message to C-SN1 820-3. The data forwarding information request message may include identification information of the selected PSCell. That is, MN 820-1 may transmit a message requesting information related to data forwarding proposals to C-SN1 820-3, which is the new serving SN to which the selected PSCell belongs.

In step S811, C-SN1 820-3 transmits a data forwarding information response message to MN 820-1. The data forwarding information response message may include information related to data forwarding proposals for C-SN1 terminated PDU sessions and/or DRBs (C-SN1 terminated PDU sessions/DRBs). Here, C-SN1 terminated PDU sessions and/or DRBs include data radio bearers where PDCP is located in C-SN1 in MR-DC. The information related to data forwarding proposals may include at least one of information related to uplink forwarding proposals or information related to downlink forwarding proposals. For example, the information related to data forwarding proposals may include information where C-SN1 820-3 proposes uplink and/or downlink forwarding to other SNs in preparation for when C-SN1 820-3 operates as the new serving SN.

In step S813, MN 820-1 transmits a data forwarding request and update admission message to other SNs (e.g., S-SN 820-2 and C-SN2 820-4) based on information related to data forwarding proposals received from C-SN1 820-3. The data forwarding request and update admission message may include information related to data forwarding proposals for MN terminated PDU sessions and/or DRBs, and/or information related to data forwarding proposals for C-SN1 terminated PDU sessions and/or DRBs.

In step S815, each of S-SN 820-2 and C-SN2 820-4 transmits a data forwarding response message to MN 820-1. The data forwarding response message may include information related to new forwarding TNLs allocated based on information related to data forwarding proposals included in the data forwarding request and update admission message. Specifically, each of S-SN 820-1 and C-SN2 820-3 may determine whether to accept the data forwarding proposal by considering information related to data forwarding proposals for MN terminated PDU sessions and/or DRBs, or information related to data forwarding proposals for C-SN1 terminated PDU sessions and/or DRBs. If each of S-SN 820-1 and C-SN2 820-3 accepts data forwarding, they may allocate forwarding TNLs for the corresponding PDU sessions and/or DRBs and transmit a data forwarding response message including information related to the allocated forwarding TNLs to MN 820-1. The information related to forwarding TNLs may include at least one of target GPRS Tunneling Protocol - User Plane Tunnel Endpoint Identifier (GTP-U TEID) or target IP address. According to an embodiment, if MN 820-1 knows in advance during the CPAC preparation phase that the prepared candidate PSCell of the corresponding SN has not allowed the corresponding PDU sessions and/or DRB, that is, the PDU session and DRB for which C-SN1 820-3 proposed data forwarding, steps S813 and S815 for that SN may be omitted. If there are PDU sessions or DRBs relocated to the MN during the CPAC preparation phase for prepared candidate PSCells of SNs other than C-SN1 and data forwarding for these is proposed by C-SN1, the MN may determine acceptance and allocation of the corresponding forwarding TNLs. On the other hand, for prepared candidate PSCells belonging to SNs other than the new serving SN C-SN1, if PDU sessions and/or DRBs are established at the MN and relocated to that SN during the CPAC preparation phase and the selected PSCell will serve the UE, the MN may generate the corresponding forwarding proposal and request data forwarding from that SN.

In step S817, MN 820-1 transmits an Xn-U address indication message to S-SN 820-2. The Xn-U address indication message may indicate stopping early data forwarding and indicate initiation of late data forwarding to the new serving SN C-SN1 820-3. That is, by transmitting Xn-U address indication to S-SN 820-2, if early data forwarding was triggered at S-SN 820-2, MN 820-1 may stop the triggered early data forwarding and deliver information related to forwarding TNLs previously allocated by C-SN1 820-3 so that S-SN 820-2 starts late data forwarding to C-SN1 820-3 selected as the new serving SN.

In step S819, MN 820-1 provides information related to new forwarding TNLs allocated by the MN and/or at least one other SN to the new serving SN C-SN1 820-3. For data forwarding of C-SN1 820-3 for PDU sessions and/or DRBs related to the selected PSCell, MN 820-1 may provide information related to new forwarding TNLs allocated by the MN and/or at least one other SN (e.g., S-SN 820-2 and C-SN2 820-4) to C-SN1 820-3. The new forwarding TNLs may include forwarding TNLs allocated at S-SN 820-2 and C-SN2 820-4 based on data forwarding proposals of C-SN1 820-3. At this time, MN 820-1 may deliver the RRC reconfiguration complete message of SCG received from UE 810 to C-SN1 820-3. Here, the RRC reconfiguration complete message of SCG received from UE 810 may be the SN RRC reconfiguration complete message included in the RRC reconfiguration complete message received in step S803.

In step S821, S-SN 820-2 transmits an SN status transfer message to MN 820-1. MN 820 transmits the SN status transfer message to the new serving SN C-SN1 820-3.

In step S823, S-SN 820-2 starts late data forwarding. Late data forwarding may proceed from S-SN 820-2 to C-SN1 820-3. For DRBs to which PDCP status preservation is applied, after C-SN1 820-3 receives the SN status transfer message from S-SN 820-2, early data delivery from C-SN1 830-3 to candidate PSCells in other SNs may occur toward the forwarding TNLs received in step S819. DRBs to which PDCP status preservation is applied may include RLC Unacknowledge Mode (UM)/acknowledge mode (AM) DRBs to which early data delivery is applied or RLC AM bearers when early data delivery is not performed.

In the embodiment described with reference to FIG. 8a and FIG. 8b, steps S809 to S815 may be performed during CPAC preparation procedures. In this case, SN addition procedures or SN modification procedures may be improved for the MN to retrieve data forwarding proposals for PDU sessions and/or DRBs approved for each candidate PSCell. At this time, the retrieved forwarding proposals may be used when the corresponding candidate PSCell is selected for subsequent access. Alternatively, SN addition procedures or SN modification procedures may be improved to retrieve information related to at least one forwarding TNL to be used for subsequent CPAC operations when a candidate PSCell in another SN is selected for access.

According to an embodiment, during steps S809 to S815, the MN may request PDU session modification for candidate PSCells other than the selected PSCell. In this case, CPAC configuration previously configured to the UE may be updated and reconfigured appropriately for the UE.

According to an embodiment, when steps S809 and S811 are performed after CPAC execution, SN modification procedures may be used to retrieve forwarding proposals from the selected PSCell. That is, the MN may retrieve allowed PDU sessions or DRBs for the selected PSCell using SN modification procedures during CPAC preparation procedures.

According to an embodiment, when steps S813 and S815 are performed after CPAC execution, SN modification procedures may be used and improved for the MN to request data forwarding from candidate SNs other than the selected SN and retrieve information related to new forwarding TNLs. If a candidate SN other than the selected SN is excluded from candidates for subsequent CPAC operations for the UE, in steps S813 and S815, the MN may perform release procedures for SNs that do not need data forwarding requests using SN release procedures.

According to an embodiment, delivery of the RRC reconfiguration complete message of UE SCG for the selected SN may be performed separately from step S819 using legacy SN reconfiguration complete procedures.

As described above, the present disclosure proposes an apparatus and method for supporting subsequent CPAC operations in a network system. According to an embodiment, a network system may include network nodes (e.g., MN and at least one SN) interconnected by X2 interface or Xn interface to support UE for subsequent CPAC operations. According to an embodiment, preparation procedures for subsequent CPAC for UE may be performed between the MN and at least one SN.

According to an embodiment, the MN may retrieve data forwarding proposals from candidate PSCells for PDU sessions or DRBs approved by the candidate PSCells. The retrieved data forwarding proposals may be used based on the corresponding PSCell being selected for subsequent UE access. According to an embodiment, the MN may request data forwarding from a candidate PSCell and provide data forwarding proposals together with data forwarding proposals retrieved from at least one other candidate PSCell. According to an embodiment, when another candidate PSCell is selected for access by the UE, the MN may retrieve information related to forwarding TNLs from the candidate PSCell to be used for subsequent CPAC.

According to an embodiment, after a candidate PSCell is selected for UE access, the MN may retrieve data forwarding proposals from the candidate PSCell. According to an embodiment, after another candidate PSCell is selected for UE access, the MN may request data forwarding to the candidate PSCell. According to an embodiment, after another candidate PSCell is selected for UE access, the MN may retrieve information related to forwarding TNLs from the candidate PSCell.

According to an embodiment, the MN may request to modify previous admission results toward at least one other candidate PSCell other than the PSCell selected for UE access, and may reconfigure CPAC configuration previously configured to the UE.

According to an embodiment, the MN may selectively provide information related to data forwarding TNLs allocated by at least one other candidate PSCell to the candidate PSCell selected by the UE for access. At this time, data forwarding proposals of the selected PSCell may be considered.

According to an embodiment, the SN of the candidate PSCell selected for UE access may initiate early data forwarding toward at least one other candidate PSCell among candidate SNs for DRBs to which PDCP status preservation is applied after receiving an SN status transfer message from the previous serving PSCell. DRBs to which PDCP status preservation is applied may include RLC UM/AM DRBs to which early data forwarding was previously applied, or RLC AM bearers when early data forwarding was not performed at the previous serving PSCell.

FIG. 9 illustrates an example of a procedure for obtaining information related to data forwarding proposals according to an embodiment of the present disclosure. FIG. 9 illustrates a method performed by a first network node. The first network node may include an MN. For example, the first network node may be MN 820-1 described in FIG. 8a and FIG. 8b.

Referring to FIG. 9, in step S901, the first network node transmits an SN addition request message. The first network node may transmit an SN addition request message to at least one second network node in the preparation phase of subsequent CPAC. The second network node may be a candidate SN. The first network node may request provision of information related to data forwarding proposals from at least one second network node using the SN addition request message. The SN addition request message may be a message that requests resource allocation for the UE from at least one candidate SN and indicates that the request is for CPAC.

In step S903, the first network node receives an SN addition request acknowledge message. The first network node may receive an SN addition request acknowledge message from at least one second network node in response to the SN addition request message. The SN addition request acknowledge message may include information related to data forwarding proposals of the second network node, which is a candidate SN for subsequent CPAC. The information related to data forwarding proposals of the second network node may include at least one of information related to uplink forwarding proposals or information related to downlink forwarding proposals for second network node terminated PDU sessions and/or DRBs. Here, the second network node terminated PDU sessions and/or DRBs include data radio bearers where PDCP is located in the second network node in MR-DC. The information related to data forwarding proposals of the second network node may be used for data forwarding when the PSCell of the second network node is later selected for UR access by subsequent CPAC. That is, the information related to data forwarding proposals of the second network node may be used when the second network node becomes the new serving SN. For example, if the PSCell of the second network node satisfies execution conditions configured to the UE, the PSCell of the second network node may be selected by the UE. At this time, data forwarding may be performed based on information related to data forwarding proposals of the second network node and information related to new forwarding TNLs of other network nodes allocated based on the information related to data forwarding proposals.

According to an embodiment, the first network node may transmit information related to data forwarding proposals of the candidate SN to other network nodes (e.g., source SN and/or other candidate SNs), and obtain information related to new forwarding TNLs allocated based on information related to data forwarding proposals of the candidate SN from each of the other network nodes. The operation of obtaining information related to new forwarding TNLs may be performed during the CPAC preparation phase or after CPAC preparation and UE configuration procedures are performed. The first network node may provide the obtained information related to new forwarding TNLs to the second network node.

FIG. 10 illustrates an example of a procedure for transmitting information related to data forwarding proposals according to an embodiment of the present disclosure. FIG. 10 illustrates a method performed by a second network node. The second network node may include a candidate SN. For example, the second network node may be candidate SN1 820-3 described in FIG. 8a and FIG. 8b.

Referring to FIG. 10, in step S1001, the second network node receives an SN addition request message. The second network node may receive an SN addition request message for preparation of subsequent CPAC from the first network node. The first network node may be an MN. The SN addition request message may include a message requesting provision of information related to data forwarding proposals. The SN addition request message may be a message that requests resource allocation for the UE from at least one candidate SN and indicates that the request is for CPAC.

In step S1003, the second network node transmits an SN addition request acknowledge message. The second network node may transmit an SN addition request acknowledge message to the first network node in response to the SN addition request message. The SN addition request acknowledge message may include information related to data forwarding proposals of the second network node for subsequent CPAC. For example, the second network node may transmit an SN addition request acknowledge message including information related to forwarding proposals of the second network node to the first network node in preparation for when the PSCell of the second network node is later selected for UE access by subsequent CPAC. The information related to data forwarding proposals may include at least one of information related to uplink forwarding proposals or information related to downlink forwarding proposals for second network node terminated PDU sessions and/or DRBs. The information related to data forwarding proposals of the second network node may be used when the second network node becomes the new serving SN. For example, if the PSCell of the second network node satisfies execution conditions configured to the UE, the PSCell of the second network node may be selected by the UE. At this time, data forwarding may be performed based on information related to data forwarding proposals of the second network node and information related to new forwarding TNLs of other network nodes allocated based on the information related to data forwarding proposals.

According to an embodiment, the second network node may receive information related to new forwarding TNLs allocated by other network nodes from the first network node. The new forwarding TNLs may be allocated based on information related to data forwarding proposals of the second network node.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a first network node in a wireless communication system, comprising:
transmitting a secondary node (SN) addition request message to a second network node; and
receiving an SN addition request acknowledgement message from the second network node,
wherein the SN addition request acknowledgement message includes information related to a data forwarding proposal of the second network node.

2. The method of claim 1, wherein the information related to the data forwarding proposal of the second network node includes information proposing a data forwarding for at least one of a protocol data unit (PDU) session terminated at the second network node or a data radio bearer (DRB).

3. The method of claim 1, wherein the information related to the data forwarding proposal of the second network node is used based on the second network node being selected for an access.

4. The method of claim 1, wherein the information related to the data forwarding proposal of the second network node includes at least one of information related to a downlink forwarding proposal or information related to an uplink forwarding proposal.

5. The method of claim 1, wherein the SN addition request message is transmitted for subsequent conditional primary secondary cell (PSCell) addition or change (CPAC), and
wherein the second network node includes a candidate SN.

6. The method of claim 1, wherein the method further comprises:
obtaining information related to at least one forwarding transport network layer address (TNL) based on the information related to the data forwarding proposal of the second network node; and
transmitting the obtained information related to the at least one forwarding TNL to the second network node, and
wherein the at least one forwarding TNL is allocated based on the information related to the data forwarding proposal of the second network node by at least one of the first network node or at least one other network node.

7. The method of claim 6, wherein obtaining of the information related to the at least one forwarding TNL comprises:
transmitting the information related to the data forwarding proposal of the second network node to the at least one other network node; and
receiving information related to forwarding TNLs allocated at the at least one other network node.

8. The method of claim 1, wherein the SN addition request message includes information related to a candidate PSCell.

9. A method performed by a second network node in a wireless communication system, comprising:
receiving a secondary node (SN) addition request message from a first network node; and
transmitting an SN addition request acknowledgement message to the first network node,
wherein the SN addition request acknowledgement message includes information related to a data forwarding proposal of the second network node.

10. The method of claim 9, wherein the method further comprises receiving information related to at least one forwarding transport network layer address (TNL), and
wherein the at least one forwarding TNL is allocated based on the information related to the data forwarding proposal of the second network node by at least one of the first network node or another network node.

11. A first network node in a wireless communication system, comprising:
a transceiver; and
a processor connected to the transceiver,
wherein the processor is configured to control to:
transmit a secondary node (SN) addition request message to a second network node, and
receive an SN addition request acknowledgement message from the second network node,
wherein the SN addition request acknowledgement message includes information related to a data forwarding proposal of the second network node.

12. A second network node in a wireless communication system, comprising:
a transceiver; and
a processor connected to the transceiver,
wherein the processor is configured to control to:
receive a secondary node (SN) addition request message from a first network node, and
transmit an SN addition request acknowledgement message to the first network node,
wherein the SN addition request acknowledgement message includes information related to a data forwarding proposal of the second network node.

13. A communication apparatus, comprising:
at least one processor;
at least one computer memory connected to the at least one processor and storing instructions that, based on being executed by the at least one processor, perform operations comprising:
transmitting a secondary node (SN) addition request message to a second network node; and
receiving an SN addition request acknowledgement message from the second network node,
wherein the SN addition request acknowledgement message includes information related to a data forwarding proposal of the second network node.

14. A non-transitory computer-readable medium storing at least one instruction, comprising:
the at least one instruction executable by a processor,
wherein the at least one instruction controls an apparatus to:
transmit a secondary node (SN) addition request message to a second network node, and
receive an SN addition request acknowledgement message from the second network node,
wherein the SN addition request acknowledgement message includes information related to a data forwarding proposal of the second network node.
